# EUROPÄISCHE PATENTSCHRIFT

(11) **EP 1 992 845 B1**
(45) Veröffentlichungstag und Bekanntmachung des Hinweises auf die Patenterteilung: **17.08.2011**
(21) Anmeldenummer: 07150371.8
(22) Anmeldetag: 21.12.2007
(51) Int. Cl.: F16H 59/10

(54) **Elektronisches Wählhebelmodul**
Electronic selector lever module
Module de levier sélecteur électronique

(30) Priorität: 12.07.2007 DE 102007032545; 15.05.2007 DE 102007022664
(43) Veröffentlichungstag der Anmeldung: 19.11.2008
(73) Patentinhaber: ZF Friedrichshafen AG, 80846 Friedrichshafen (DE)
(72) Erfinder: Schober, Thomas, 92256 Hahnbach (DE); Deichler, Thomas, 92237 Sulzbach-Rosenberg (DE); Götz Hans-Ludwig, 92256 Hahnbach (DE)

(56) Entgegenhaltungen:
- WO-A-01/11271
- WO-A-98/03803
- WO-A-99/11951
- DE-B3- 10 319 720
- DE-B3-102006 021 078

## Beschreibung

Die Erfindung bezieht sich auf ein elektronisches Wählhebelmoduf zur Erzeugung von Gangschaltsignalen für ein Automatik-Schaltgetriebe eines Kraftfahrzeugs, wie es aus der Patentschrift DE 103 19 720 B3 welche alle Merkmale des Oberbegriffs des Anspruchs 1 bzw. des Anspruchs 2 offenbart, bekannt ist. Die Schrift offenbart im Prinzip eine Leiterplatte mit zwei Gruppen von Sensoren und mit einem Mechanismus, der die Bewegungen des Gangwahlhebels auf die Sensoren überträgt.

In der bekannten Kulissenschalteinheit befindet sich die Sensorik seitlich versetzt relativ zur Schaltgasse des Gangwahlhebels, wobei die Leiterplatte insbesondere parallel zur Ebene der Schaltgasse angeordnet ist. Dieses elektronische Wählhebelmodul arbeitet sehr zuverlässig und seine Baugröße ist für die meisten Anwendungen geeignet. Es gibt jedoch Anwendungen, in denen der vorhandene Einbauraum nicht ausreichen würde.

Die Erfindung bezieht sich deshalb auch auf ein elektronisches Wählhebelmodul, wie es in der nach veroffentlichten Patentschrift DE 10 2006 021 078 B beschrieben ist. In dieser Schrift ist für ein elektronisches Wählhebelmodul die Aufgabe gelöst, unter Beibehaltung der elektrotechnischen Zuverlässigkeit mit einem geringeren Einbauraum auszukommen, so dass das Modul für verschiedene Fahrzeuggrößen geeignet ist. Bei dieser Lösung wird die Leiterplatte nicht mehr seitlich und parallel zur Schaltgasse angeordnet, sondern in Querausrichtung vor die Schaltgasse gelegt, so dass die Bewegung in der Schaltgasse D, N, R, P des Gangwahlhebels auf die Sensorseite der Leiterplatte zu gerichtet ist. Diese Ausrichtung bedingt eine Neukonstruktion des Mechanismus, der den Gangwahlhebel mit den Sensorbetätigungsgliedern im Bereich der Leiterplatte verbindet.

An der Eingangsseite und an der Ausgangsseite des Mechanismus, d. h. bei den Bewegungen, die am Gangwahlhebel eingegeben werden und die an der Leiterplatte ausgegeben werden, bleibt es erfindungsgemäß bei einem Prinzip, das sich in den Modulen gemäß DE 103 19 720 B3 und DE 10 2006 021 078 B bewährt hat. Die übliche Schwenkung des Gangwahlhebels in der hauptsächlichen Schaltgasse P, R, N, D wird in eine Rotationsbewegung für einen Winkelsensor umgewandelt. Der Winkelsensor ist auf der Leiterplatte angeordnet und wird durch einen Rotor - vorzugsweise berührungslos - betätigt.

Eine quer zu der Richtung der Schaltgasse erfolgende Bewegung des Gangwahlhebels kann je nach Schaltkulisse eine Tippbewegung zur manuellen Gangwahl sein oder kann bei einer anderen Schaltkulisse einen Gassenwechsel in eine zweite Schaltgasse bedeuten In der nachveroffentlichten DE 10 2006 021 078 B wurde diese Querbewegung geradlinig für einen weiteren Sensor umgesetzt, der als Wegsensor ebenfalls auf der Leiterplatte angeordnet war. An dieser Stelle hat sich eine Verbesserung des Mechanismus gemäß nachveroffentlichten DE 10 2006 021 078 B als notwendig der erwiesen. Bei dem bisherigen Verfahren ergab sich ein Problem bei der Erkennung von Brüchen. Die Bewegung des Gangwahlhebels wird durch einen Bügel mit Kugelfortsatz auf den erfindungsgemäßen Mechanismus übertragen. Wenn dieser Bügel bricht, sei es durch Überbeanspruchung oder sei es durch Missbrauch, so konnte dieser Fehler bisher nicht detektiert werden.

Als Problem hat sich auch die Führung des Weiteren, zusätzlich zum Winkelsensor-Bedämpfungselement vorgesehenen Bedämpfungselements herausgestellt. Bei der Umsetzung dieser quer zur Richtung der Schaltgasse erfolgenden Bewegung des Gangwahlhebels konnte es vorkommen, dass durch eine Überdrückung oder einen Missbrauch die Auswertung durch die Sensorik ungenau wurde.

Schließlich sollen auch Toleranzen, die in der Bewegungsbahn des Bügels mit Kugelfortsatz gemäss nachveroffentlichten der DE 10 2006 021 078 B liegen, mechanisch kompensiert werden und keine Ungenauigkeiten in der Auswertung verursachen

Schließlich soll auch die Führung des Rotors relativ zu dem Winkelsensor mit möglichst wenigen Bauteilen und mit möglichst geringen Abstandstoleranzen gewährleistet sein.

Die Erfindung hat sich deshalb positiv die Aufgabe gestellt, bei einem elektronischen Wählhebelmodul zur Erzeugung von Gangschaltsignalen
- eine durch Bruch des Bügels erfolgte Freigabe des mechanischen Ankopplungspunkts zu erkennen,
- mit möglichst wenig Bauteilen auszukommen,
- Die Bedämpfungselemente zur Umsetzung der längs und quer zur Schaltgasse erfolgenden Bewegungen des Gangwahlhebels möglichst genau zu führen,
- und zwar auch dann, wenn die Bewegungsbahn des angekoppelten Gangwahlhebels infolge von mechanischen Toleranzen streut.

Die Lösung erfolgt durch ein elektronisches Wählhebelmodul mit Winkelsensoren nach dem Anspruch 1 oder alternativ nach dem Anspruch 2. Zweckmäßige Weiterbildungen sind in den jeweiligen Unteransprüchen enthalten.

Das Neuartige der Erfindung liegt darin, dass nun auch der zweite, für die Querbewegung geeignete Sensor ein Winkelsensor ist. Dementsprechend ist der Träger für die zugehörigen Quer-Bedämpfungselemente jetzt ebenfalls eine Art Rotor, der hier in Form eines länglichen Tipphebels ausgebildet und drehbar gelagert ist. Der mechanische Ankopplungspunkt vom Bügelfortsatz des Gangwahlhebels her ist nun ein doppelter: Es wird sowohl der Rotor für die Schaltgassenbewegung als auch der drehbar gelagerte Tipphebel für die Querbewegung mittels einer gemeinsamen kurzen Hülse im Ankopplungspunkt angetrieben. Die Hülse ist mit dem Schieber fest verbunden und in einer Aussparung des Tipphebels beweglich geführt.

Der Schieber kann sich relativ zum Rotor in Schienen bewegen. Bei einer Ausführungsform gem. Ansprunch 2 sind die Schienen für den Schieber nicht direkt radial im Rotor integriert, sondern gem. Anspruch 2 tangential zum Drehpunkt an einer Hilfsvorrichtung mit Längsschieber angeordnet. Dadurch kann ausgeschlossen werden, dass bei bestimmten Bewegungen des Schiebers der Rotorwenn auch nur leicht- mitbewegt wird. Bei diesen unerwünschten Bewegungen kann es sich z. B. um einen Impuls oder ein überdrücken des Gangwahlhebels verursacht durch den Anwender handeln (Missbrauch). Bei der Ausführungsform gem. Anspruch 2 kommen als Bauteile ein Längsschieber, eine Hilfsvorrichtung mit Schienen und Verlängerungsarm des Rotors hinzu.

Ein weiteres wichtiges Erfindungsmerkmal ist eine präzise Führung des Rotors, der entweder einen abgerundeten Rand der Leiterplatte umgreift oder gabelförmig eine auf der Leiterplatte befestigte Rotorführung einfasst.

Die Erfindung wird anhand der Patentzeichnung weiter erläutert. Es zeigt:
- Fig 1: ein Gehäuse mit einer Schaltkulisse, in der ein Gangwahlhebel gelagert ist, der seine Bewegung auf ein Wählhebelmodul gem Ansprunch 1 uberträgt;
- Fig 2: eine perspektivische Explosivdarstellung des Wählhebelmoduls gem. Anspruch 1,
- Fig. 3a: eine Aufsicht auf das Wählhebelmodul gem. Anspruch 1 wobei die Rotorstellung einer Stellung D des Gangwahlhebels entspricht;
- Fig. 3b: Aufsicht wie in Figur 3a, wobei jedoch die Rotorstellung einer Stellung P des Gangwahlhebels entspricht;
- Fig. 3c: eine perspektivische Darstellung des Wählhebelmoduls gem. Anspruch 1 mit Rotor und Tipphebel, wobei die Position des Ankopplungspunkts einer Stellung "Auslenkung bei Bruch" des Gangwahlhebels entspricht;
- Fig. 4: eine Darstellung der Leiterplatte des Wählhebelmoduls gem. Anspruch 1, aus der eine mögliche Anordnung der Spulen der Winkelsensoren ersichtlich ist;
- Fig.5a: eine Aufsicht auf ein weiteres Ausführungsbeispiel eines Wählhebelmoduls gem. Anspruch 2, wobei die Rotorstellung einer Schaltposition S des Gangwahlhebels entspricht;
- Fig. 5b: eine Aufsicht wie in Fig. 5a, wobei jedoch die Rotorstellung einer Schaltposition D des Gangwahlhebels entspricht;
- Fig. 5c: eine Aufsicht wie in Fig 5a und 5b, wobei jedoch die Rotorstellung einer Schaltposition P des Gangwahlhebels entspricht;
- Fig. 6: eine Aufsicht wie in Fig. 5b (Schaltposition D), wobei jedoch durch den Schaltgassenwechsel die Querbewegung auf den Tipphebel übertragen wurde und in der zweiten Schaltgasse die Tippbewegung M+ ausgeführt wird;
- Fig. 7: eine Aufsicht wie in Fig 5b (Schaltposition D), wobei jedoch durch einen Gassenwechsel die Querbewegung auf den Tipphebel übertragen wurde und in der zweiten Schaltgasse eine Tippbewegung M- ausgeführt wird;
- Fig. 8: eine perspektivische, auseinander gezogene Ansicht des Wählhebelmoduls gem. Anspruch 2 mit einem Federsystem und mit der Leiterplatte;
- Fig. 9: eine perspektivische, auseinander gezogene Ansicht des Wählhebelmoduls gem. Anspruch 2 mit dem Federsystem von Fig. 8, aber ohne Leiterplatte.
- Fig. 10a: eine perspektivische, auseinandergezogene Ansicht eines besonders bevorzugten Winkelsensors, mit Blick auf die Sensorseite der Leiterplatte;
- Fig. 10b: Winkelsensor wie in Fig. 10a, jedoch mit Blick auf die Unterseite der Leiterplatte;
- Fig. 11a: Winkelsensor gemäß Fig. 10a mit Blick auf die Sensorseite, jedoch in zusammengebautem Zustand;
- Fig. 11b: Winkelsensor gemäß Fig. 10b mit Blick auf die Unterseite, jedoch ohne Angstschraube;
- Fig. 11c: Winkelsensor gemäß Fig. 10b mit Blick auf die Unterseite, in zusammengebautem Zustand;
- Fig 12a: eine perspektivische, auseinandergezogene Ansicht eines weiteren Ausführungsbeispiels eines Winkelsensors, mit Blick auf die Sensorseite der Leiterplatte;
- Fig. 12b: weiterer Winkelsensor wie in Fig. 12a, jedoch mit Blick auf die Unterseite der Leiterplatte;
- Fig. 13a: weiterer Winkelsensor wie Fig. 12a mit Blick auf die Sensorseite in zusammengebautem Zustand;
- Fig. 13b: weiterer Winkelsensor wie in Fig. 12b mit Blick auf die Unterseite, jedoch in zusammengebautem Zustand.

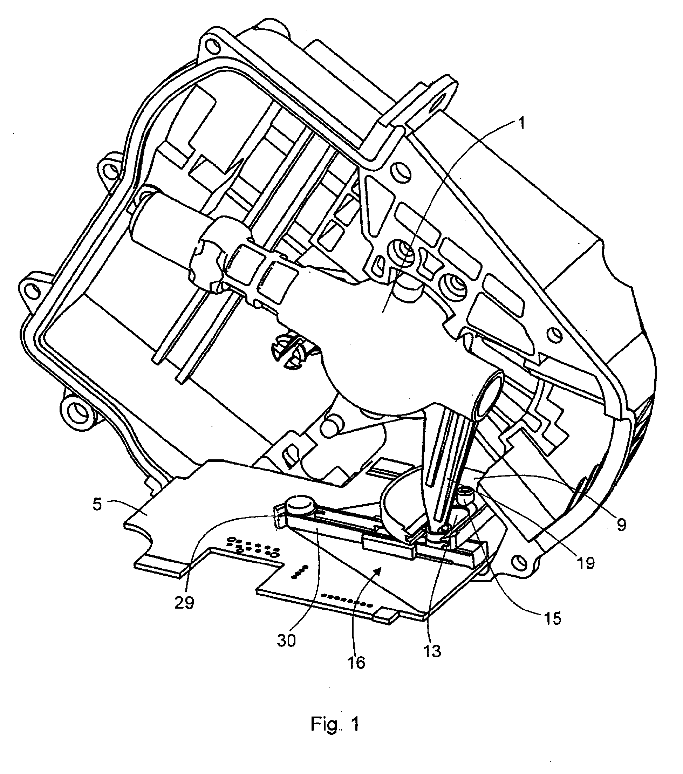

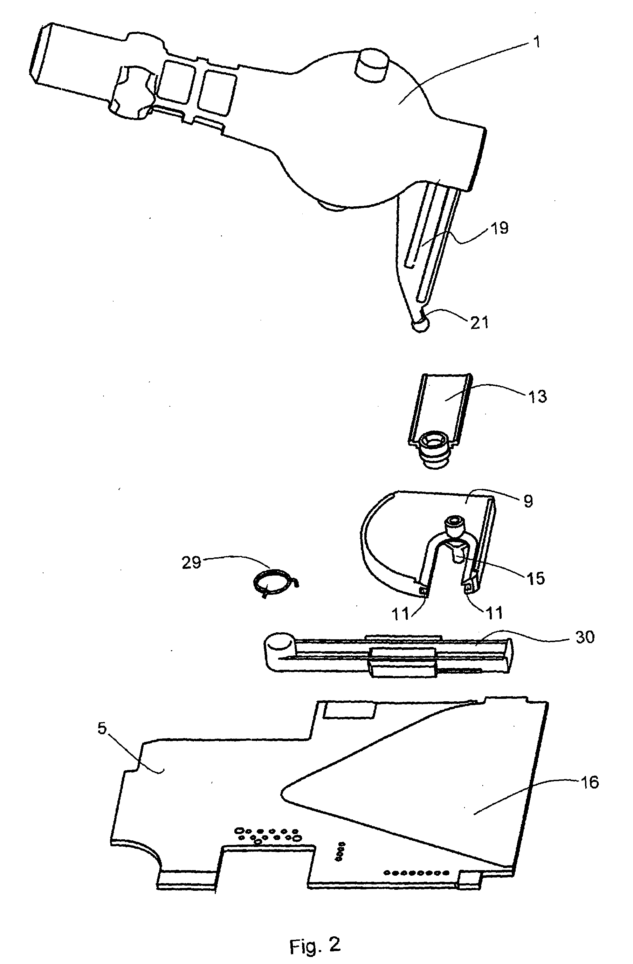

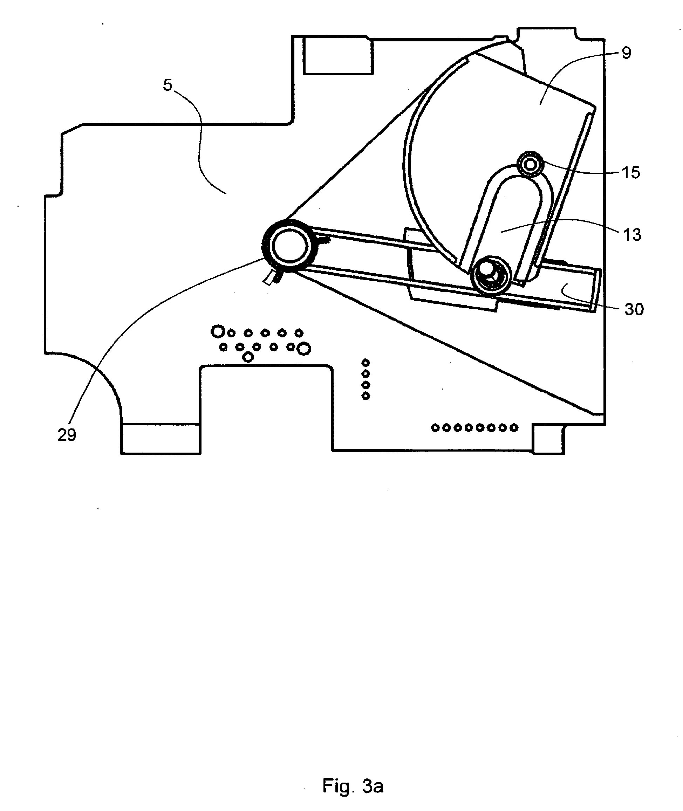

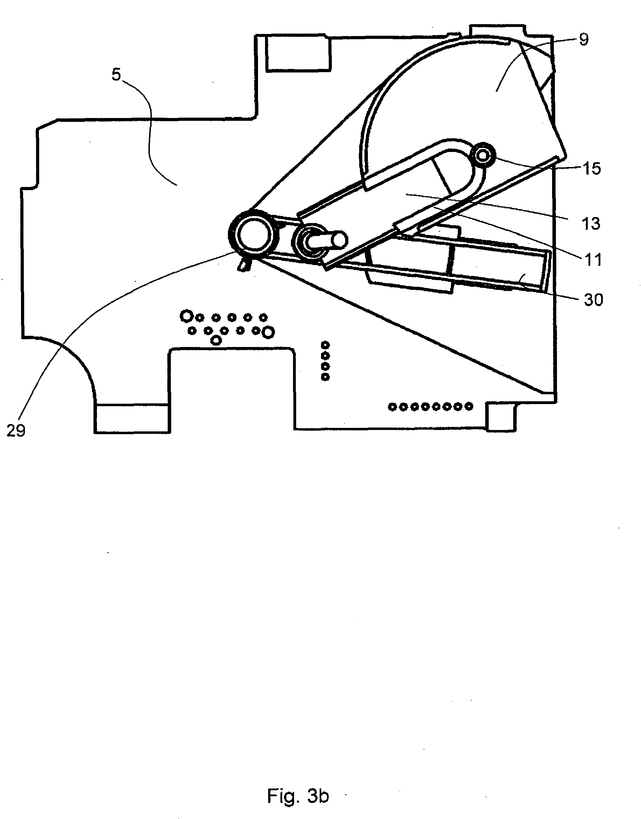

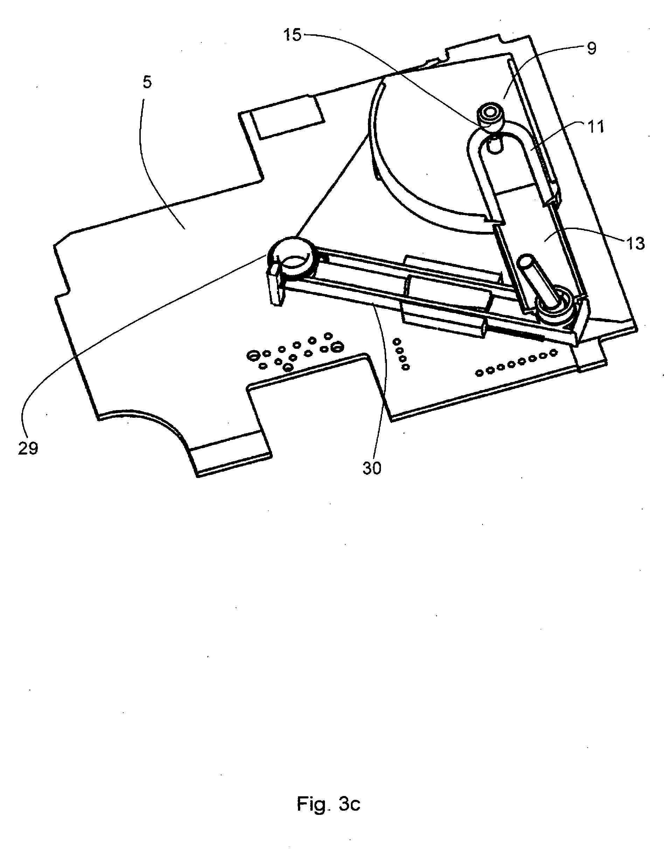

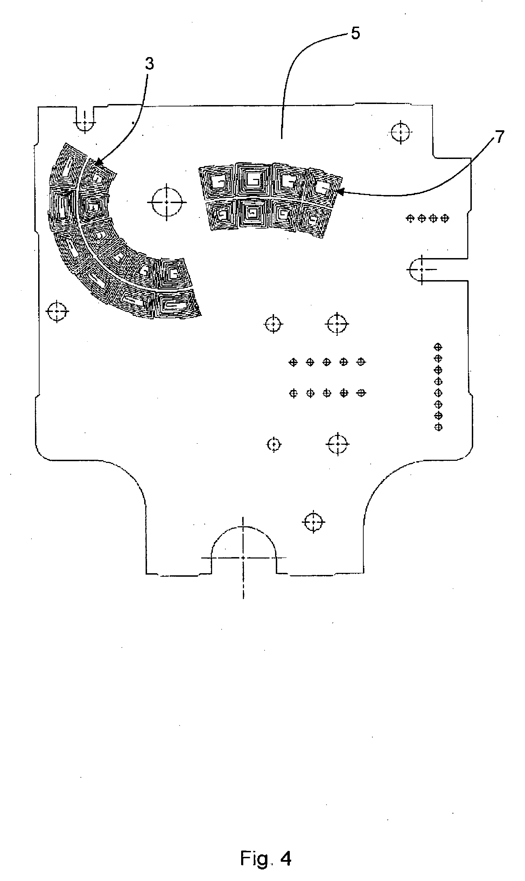

Die folgende Tabelle zeigt drei Ausführungsbeispiele für ein Layout der Schaltkulisse. Die Umsetzungen dieser Bewegungen im Wählhebelmodul sind in den Figuren 1 bis 4 erkennbar

| Layout 1 | Layout 2, Linkslenker | Layout 3, Rechtslenker |
|---|---|---|
| 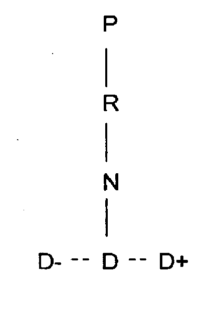 | 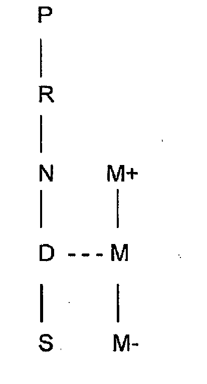 | 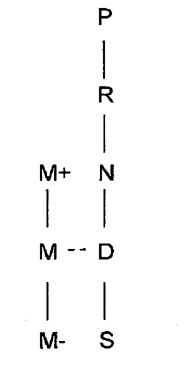 |

Dabei beschreibt Layout 1 eine einfache Schaltkulisse mit den üblichen Positionen P, R, N und D in einer Schaltgasse sowie eine Quer-Bewegung, die von der Automatik-Fahrstellung D aus eine manuelle Gangwahl in Form der bekannten TIPTRONIC® zu den Schaltstellungen D+ und D- erlaubt. In der Schaltgasse werden die Positionen P, R, N und D durchlaufen und anschließend im Wählhebelmodul durch einen Rotor 9 detektiert; die Querbewegung nach D+ oder D- wird durch einen drehbar gelagerten Tipphebel 30 detektiert

Bei den Layouts 2 und 3 für Linkslenker bzw. Rechtslenker ist die Sensorfunktion wie folgt:
- In der Hauptschaltgasse bewegt sich der Tipphebel 30 nicht; die Positionen P, R, N, D und S werden durch den Rotor 9 detektiert.
- Ein Gassenwechsel von D nach M wird durch den Tipphebel 30 detektiert und mit Hilfe eines in Schienen 11 geführten Schiebers 13 am Rotor 9 ausgeglichen
- In der Tippgasse M+ und M-, die bei diesen Layouts 2 und 3 parallel zur Gangschaltgasse liegt, wird wieder der Rotor 9 aktiv; diesmal allerdings wegen des Gassenwechsels mit einem verlängerten oder verkürzten Schieber 13.

Für alle Layouts gilt als zusätzliche Fehlerfunktion:
- Wenn der Tipphebel 30 am Ankopplungspunkt freigegeben wird, bspw. durch einen Bruch des Bügels 19, so drückt eine Drehfeder 29 den Tipphebel 30 in eine extreme Seitenposition. In dieser Position findet eine Fehlerdetektion durch den weiteren Sensor 7 statt, d. h. der Tipphebel 30 erzeugt ein Sondersignal auf einem gesonderten Spulensensor oder auch kein Signal, jedenfalls kein Signal auf den normalen Gassenwechsel- oder Quersensoren.
- Auch der Rotor 9 wird von einer vorgespannten Schenkelfeder 35 gehalten. Somit kann auch hier garantiert werden, dass der Rotor 9 bei einem Materialbruch aus dem Aktionsbereich geschoben wird.

Die Spulen beider Winkelsensoren 3 und 7 sind redundant, d. h. ein-Fehlerkorrigierend und zwei-Fehler-erkennend in mindestens zwei Bögen angeordnet. Über den kreisförmig angeordneten Spulen befindet sich jeweils ein berührungslos wirkender Bedämpfungsrotor 9 bzw. 30. Der Bedämpfungsrotor 9 für die Detektion der Schaltstellungen P, R, N, D, S steht über Schienen 11 in direkter Verbindung mit dem Schieber 13, dessen Hülse andererseits auch in einer Aussparung des Tipphebels 30 geführt wird.

Dank des Tipphebels 30 können vorhandene Überdrückungen und Missbräuche, die durch den Fahrzeuglenker verursacht werden, oder auch mechanische Einflüsse, die durch Toleranzen oder durch das Fahren auf unebenen Wegen verursacht werden, ausgeglichen werden. Durch den neuartigen Tipphebel 30 erhält man konstante, ungestörte Signale, die das Auswerten durch die Sensorik erleichtern.

Auf der Unterseite des Tipphebels 30 befindet sich, im Bereich des Gassenwechseldetektorfeldes mit seinem Winkelsensor 7, ein weiteres Bedämpfungselement zum Bedämpfen der Spulen des weiteren Winkelsensors 7. Diese Spulen dienen zum Detektieren des Gassenwechsels. Nach dem Gassenwechsel wird erneut der Schieber 13 des ersten Rotors 9 entlang seiner Führung im Tipphebel 30 bewegt.

Das Tippen M+, M- wird bei diesem Layout 2 oder Layout 3 der Schaltkulisse durch den ersten Rotor detektiert.

Um einen Bruch des Mitnehmers (Bügel 19 des Gangwahlhebels 1 mit Kugelfortsatz 21) erkennen zu können, wird im Drehlager des Tipphebels 30 eine vorgespannte Feder 29 eingesetzt. Sollte nun der Mitnehmer 19, 21 brechen, was normalerweise dazu führen würde, dass sich der Tipphebel 30 in seiner Grundposition hält, entspannt sich die Feder und schiebt den Tipphebel 30 aus dem normalen Bedämpfungsbereich des weiteren Winkelsensors 7 heraus. Außerhalb des normalen Funktionsbereichs kann nun entweder eine Extra-Spule angebracht sein, die einen Bruch detektiert, oder es kann auch mittels eines fehlenden oder falschen Normalsignals festgestellt werden, dass jener Materialbruch vorliegt.

Die in dem Stand der Technik DE 10 2006 021 078 B verwendete Hülse ist bei der erfindungsgemäßen Konstruktion so in den Schieber 13 integriert, dass sie in dem oben beschriebenen Tipphebel 30 geführt werden kann. Bei der erfindungsgemäßen Vorrichtung wird der Tipphebel 30 gleichzeitig als Abstandshalter zur Leiterplatte 5 verwendet. Dort, wo der mechanische Koppelpunkt gegen die tragende Leiterplatte 5 gedrückt wird, sind (in der Patentzeichnung nicht dargestellte) Gleitbahnen aufgebracht.

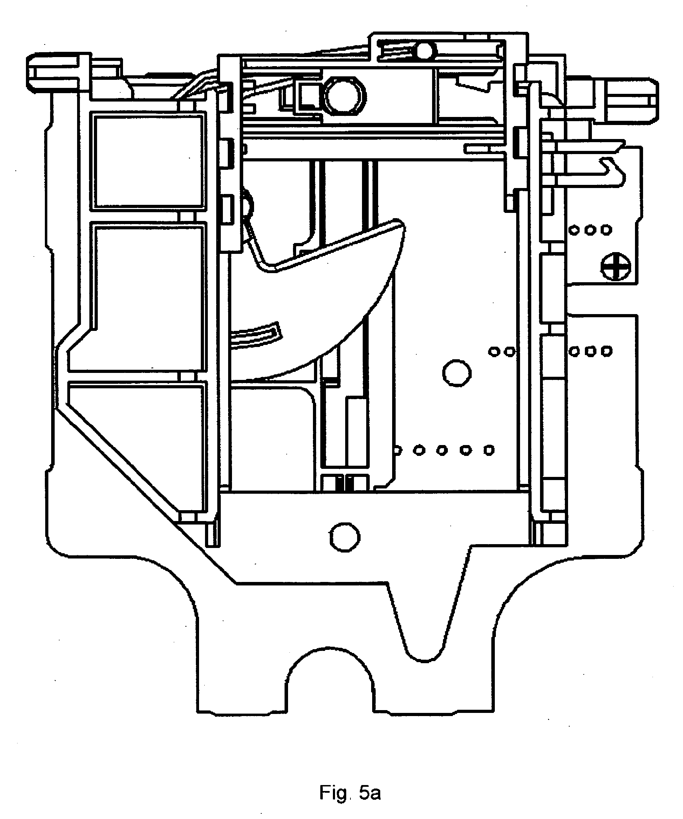

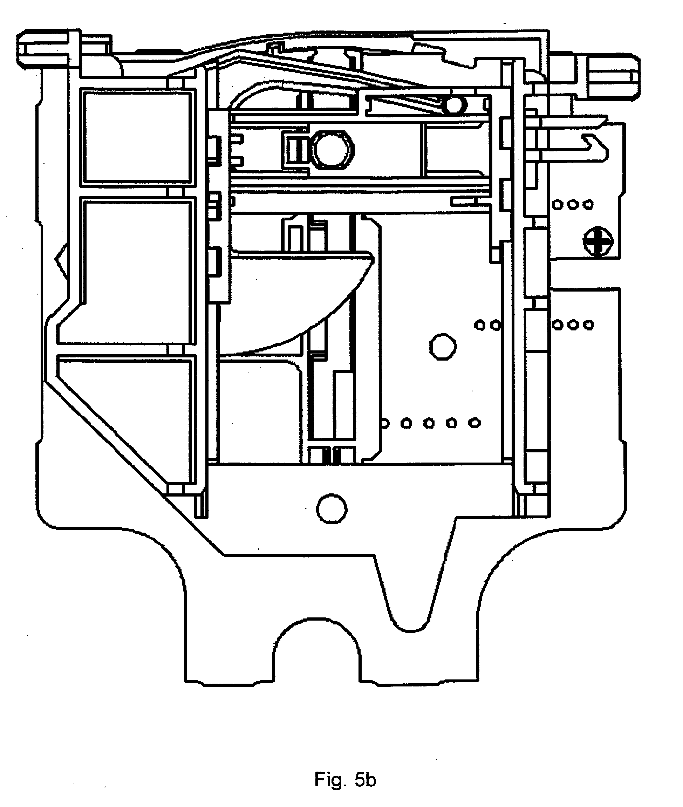

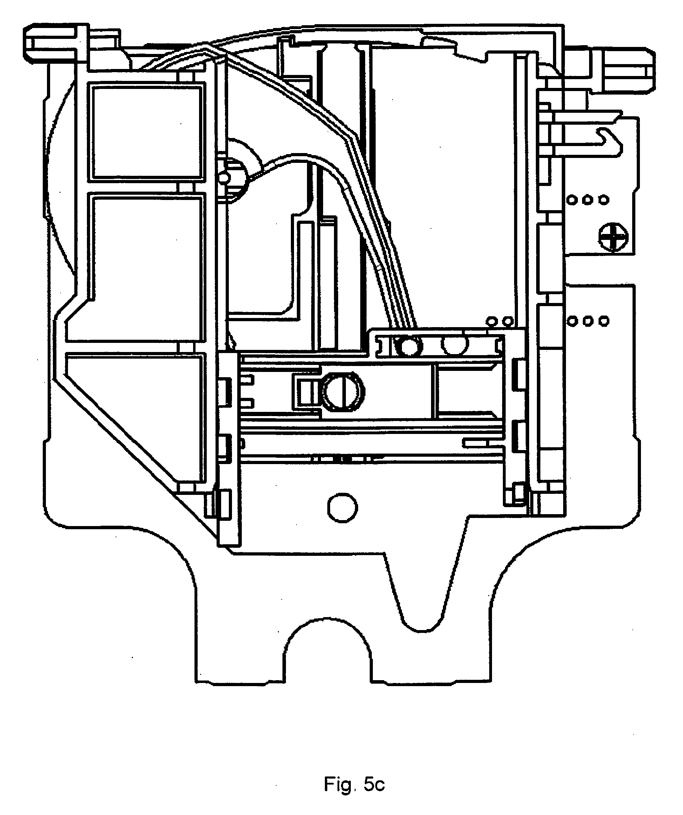

In den Fig. 5a, 5b und 5c ist ein Ausführungsbeispiel der Erfindung gem. Anspruch 2 in den drei Schaltpositionen S, D und P des Gangwahlhebels 1 dargestellt. Die Schienen für den Schieber 13 sind im Unterschied zu dem zuvor besprochenen Ausführungsbeispiel nicht mehr direkt in den Rotor 9 integriert. Vielmehr sind die Schienen aus dem Rotor 9 entfernt und separat mittels einer ortsfesten Hilfsvorrichtung in dem Wählhebelmodul angebracht.

Dieses Ausführungsbeispiel ist zum größten Teil identisch mit dem zuvor beschriebenen Aufbau, jedoch kommen als neue Bauteile ein Längsschieber, die Hilfsvorrichtung mit Schienen und ein Verlängerungsarm des Rotors 9 hinzu. Der Längsschieber sitzt beweglich, d. h. verschiebbar zwischen den Schienen der ortsfesten Hilfsvorrichtung. Der Längsschieber nimmt nunmehr die Längsbewegungen des Gangwahlhebels 1 in der Schaltgasse auf. Die Hilfsvorrichtung befindet sich oberhalb des Gesamtaufbaus.

Der Schieber 13 wird innerhalb des Längsschiebers geführt. Gleichzeitig wird der Verlängerungsarm des Rotors mit dem Längsschieber in Verbindung gebracht, um sicher zu stellen, dass der Rotor bei den beabsichtigten Längsbewegungen des Gangwahlhebels in der Schaltgasse immer mitbewegt wird Sensorspulen, Bedämpfungselemente und Sicherheitsfeder sind genauso ausgeführt wie bei dem oben entwickelten Ausführungsbeispiel.

Durch die Führung des Schiebers 13 innerhalb des nur in eine Richtung verfahrbaren Längsschiebers und durch das Mitführen des Rotors mit Hilfe des Verlängerungsarms kann der Rotor bei einem Missbrauch nicht mehr mitbewegt werden; man erhält so immer ein eindeutiges Signal.

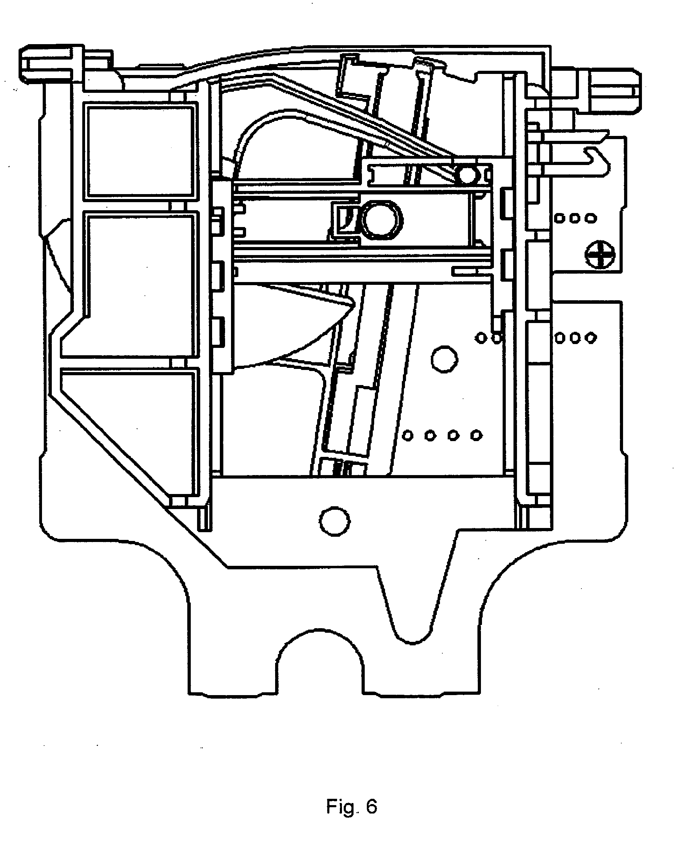

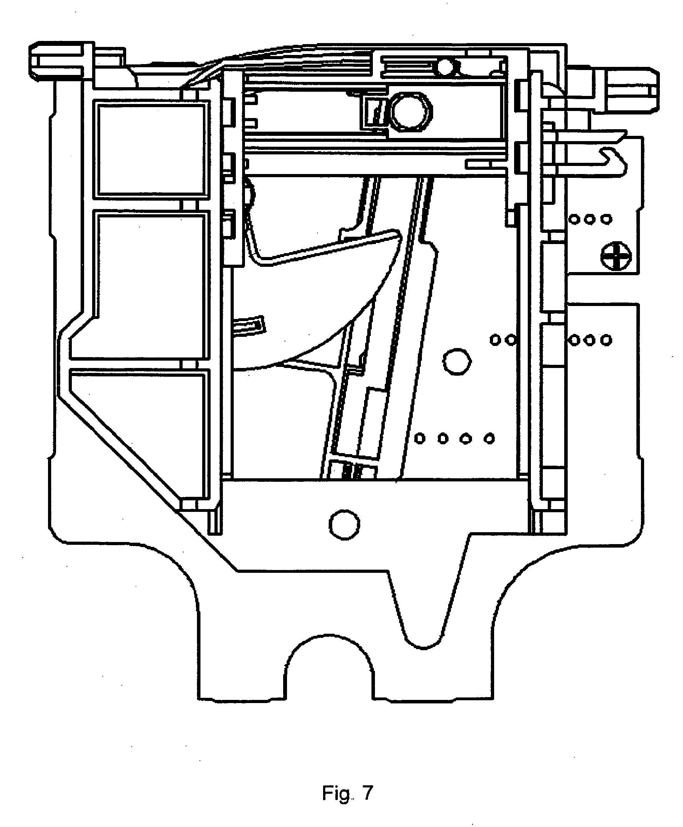

In den Fig. 6 und 7 ist zusätzlich ein Schaltgassenwechsel ausgehend von der Schaltposition D gezeigt (vergleiche Fig. 5b). Die Querbewegung führt über den Schieber 13 mit seiner Hülse zum Verschwenken des drehbar gelagerten Tipphebels 30. In der neuen Schaltgasse können dann die Tippbewegungen M+ und M- ausgeführt werden, die erneut zu einer Längsbewegung des Längsschiebers mit einer entsprechenden Übertragung auf den Verlängerungsarm des Rotors führen.

Folgende weitere Vorteile ergeben sich aus der Vorrichtung gem. Anspruch 2
- Durch eine Verschiebung des Drehpunktes des Tipphebels 30 lässt sich die Übersetzung der Winkel auf Wunsch einstellen. So kann der vom Wählhebel 1 zurückgelegte Weg von einem kleinen Winkel in einen großen Winkel übersetzt werden oder umgekehrt.
- Die erfindungsgemäße Vorrichtung ist für jede Art von Automatik-Getriebe ausgelegt, • d. h. die Positionserkennung kann für jedes Layout wie H-, X-, T-Layout usw. realisiert werden.
- Das vorliegende Wählhebelmodul ist ebenso platzsparend wie das Vorgängermodell • gemäß DE 10 2006 021 078 B, obwohl eine zusätzliche Sicherheitsfunktion realisiert wurde.

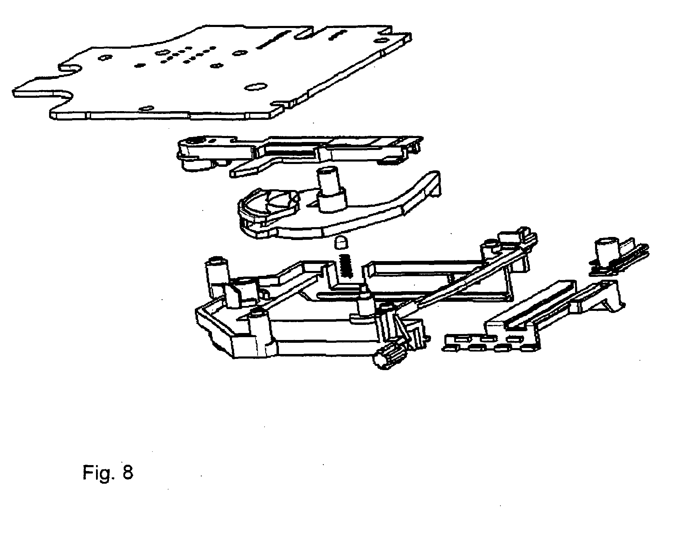

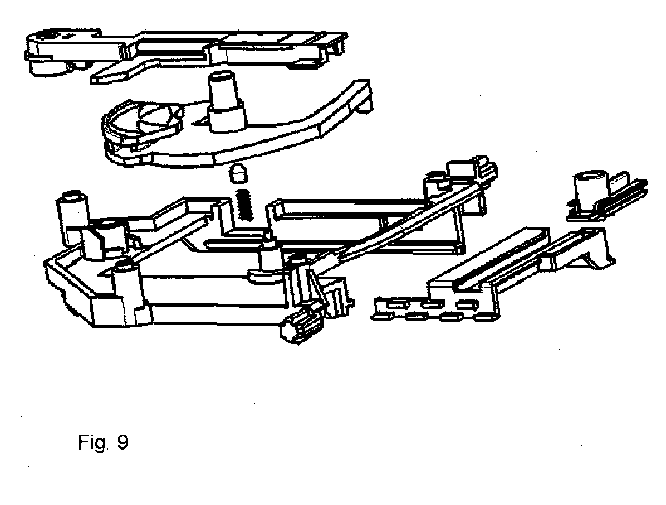

Die Figuren 8 und 9 zeigen eine mögliche Verbesserung des Wählhebelmoduls gem. Anspruch 2 die nicht zwingend erforderlich, jedoch unter bestimmten Umständen bevorzugt ist. Bei Erschütterungen kann sich der Rotor von der Leiterplatte weg bewegen. Auch durch Verschleiß im Drehlager kann sich der Abstand zwischen Rotor und Leiterplatte verändern. Diese mechanischen Störungen werden durch ein Federsystem gemäß den Fig 8 und 9 ausgeglichen. Das Federsystem besteht aus einer Druckfeder mit einem Führungselement und aus einer Aufnahme mittels eines Domes an der Rotorachse im Lager. Die Druckfeder wird vorgespannt durch die Aufnahme mittels des Domes und über das Führungselement im Rotor 9. Der Rotor 9 besitzt nun eine geschlossene Aufnahmeachse und wird mit Hilfe des Federsystems immer konstant gegen die Leiterplatte 5 gedrückt. Es ist zwar nicht zwingend notwendig, das Federsystem in das Wählhebelmodul zu integrieren; jedoch ergeben sich folgende Vorteile aus dem Einsatz der weiteren Feder:
- Der Rotor 9 kann bei Erschütterungen nicht mehr von der Leiterplatte 5 wegbewegt werden. Dadurch werden die Schaltpositionen immer genau detektiert.
- Das detektierte Signal kann bei Erschütterungen nicht mehr intermittierend abreißen. Der Rotor 9 kann nicht mehr entlang der Schnittachse der Leiterplatte 5 verrutschen, um anschließend seine ursprüngliche Stellung einzunehmen. Das Signal ist konstant.
- Das Erschütterungsproblem würde durch einen Verschleiß des Rotors 9 verstärkt werden. In diesem Fall erhielte der Rotor 9 mehr Spiel und könnte sich leichter entlang der Schnittachse der Leiterplatte 5 verschieben. Der Abstand für die Signalerkennung könnte schwanken. Mittels der vorgespannten Feder 31 wird auch dieser Verschleiß ausgeglichen.

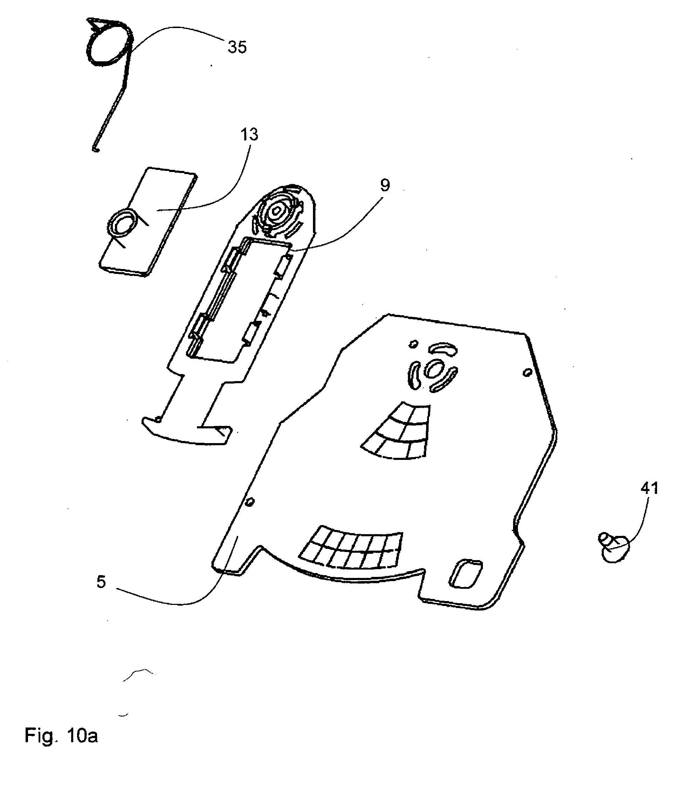

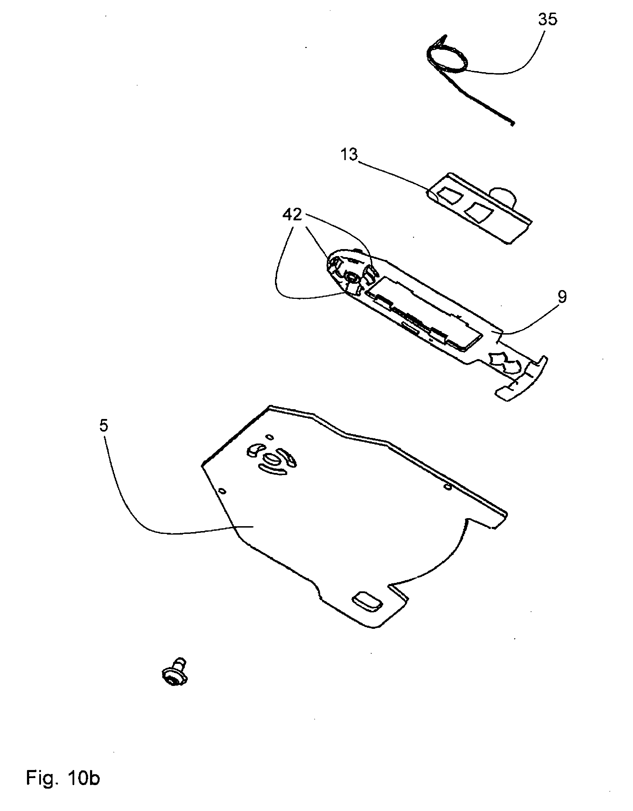

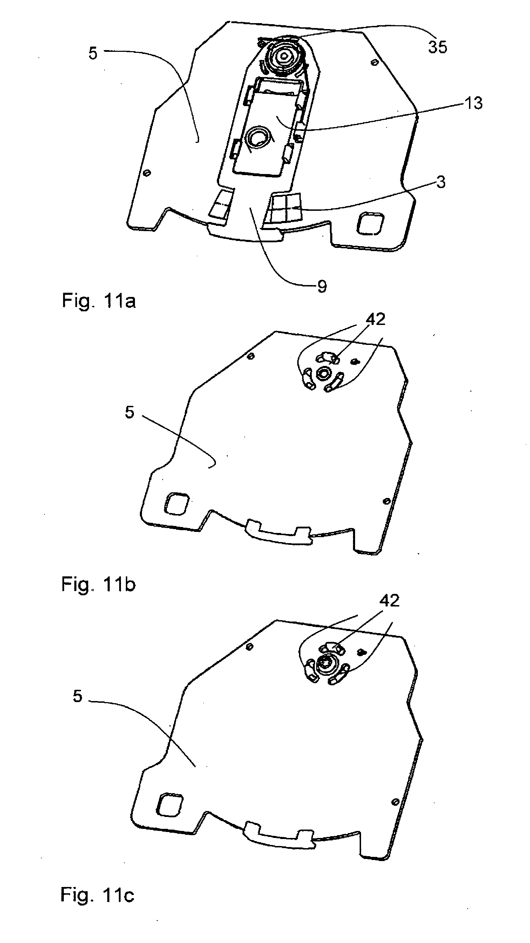

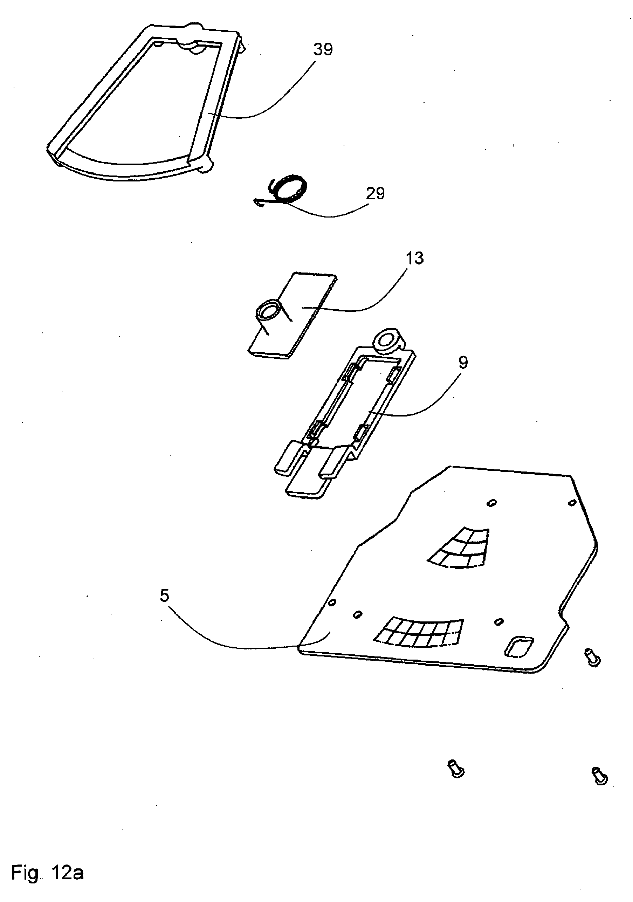

In den Fig. 10 und 11 ist ein Beispiel für eine besonders wichtige Baugruppe des erfindungsgemäßen Wählhebelmoduls dargestellt. Die Explosionszeichnung in den Figuren 10a (Aufsicht auf die Sensorseite der Leiterplatte) und Fig. 10b (Sicht auf die Unterseite der Leiterplatte) lässt erkennen, dass für diesen Sensor eine geringe Zahl von Bauteilen ausreicht. Die Baugruppe besteht aus einer Schenkelfeder 35, einem Schieber 13, einem Rotor 9, einer Leiterplatte 5 und optional aus einer Angstschraube 41. Die Leiterplatte 5 trägt bogenförmig angeordnete Sensorspulen in redundanter Ausführung. Die Spulen dienen einerseits zum Detektieren der Rotationsbewegung für die Schaltstellungen P, R, N, D und zum anderen zum Detektieren des Gassenwechsels. Oberhalb der Spulen befindet sich, wie insbesondere aus Fig. 12a zu erkennen ist, der Rotor 9 mit einem integrierten Schieber 13. Der Rotor 9 wird von einer vorgespannten Schenkelfeder 35 gehalten und kann so im Störungsfall aus dem Aktionsbereich herausgefahren werden. Mit Hilfe der Schnapphaken 42, vgl. Fig. 11c, wird der Rotor 9 im Drehlager gehalten. Generell wird der Rotor 9 auf der Leiterplatte 5 lediglich eingeschnappt. Die Angstschraube 41 ist nicht unabdingbar; sie kann optional zusätzlich zur Befestigung verwendet werden.

Die Besonderheit der Rotorlagerung besteht zunächst aus den drei Haken in der Nähe des Drehlagers, die als bewegliche Steckverbindung die Leiterplatte 5 durchgreifen. Das entgegensetzte Ende des Rotors 9 umschließt die Leiterplatte 5 an einem bogenförmigen Rand. In diesem Bereich der Leiterplatte 5 befinden sich (nicht dargestellte) Gleitbahnen, die bewirken, dass der Rotor 9 an der Leiterplatte 5 geführt wird. Auch auf der Rückseite der Leiterplatte 5 befinden sich Gleitbahnen, um ein Gleiten des Rotors 9 zu unterstützen. Somit ist der Rotor 9 direkt in Kontakt mit der Leiterplatte 5 und wird auf dieser gleichzeitig geführt (Fig. 11a, 11b und 11c). Damit weist das Bedämpfungselement des Rotors 9 immer einen konstanten Abstand zu den Spulen der Leiterplatte 5 auf, sodass eine der wichtigsten Voraussetzungen dieser Sensortechnik erfüllt ist. Ein Verziehen des Rotors 9 durch Temperatureinfluss führt nicht mehr zu einem Abheben von der Leiterplatte. Auch fertigungsbedingte Toleranzen bzgl. der Durchbiegung der Leiterplatte 5 wirken sich nicht mehr auf den Abstand aus. Durch die beidseitige Führung des Rotors 9 auf der Leiterplatte 5 entsteht eine Zwangsführung.

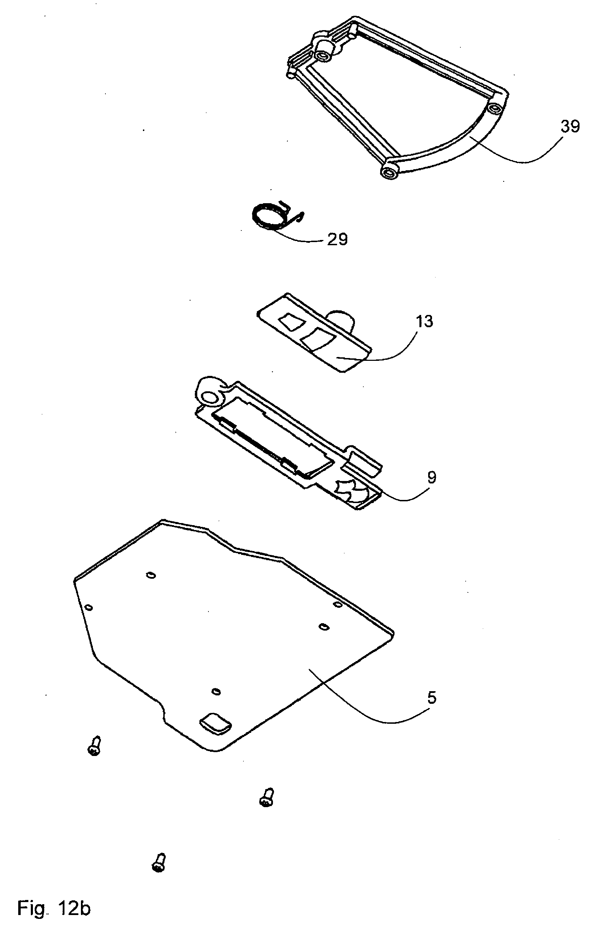

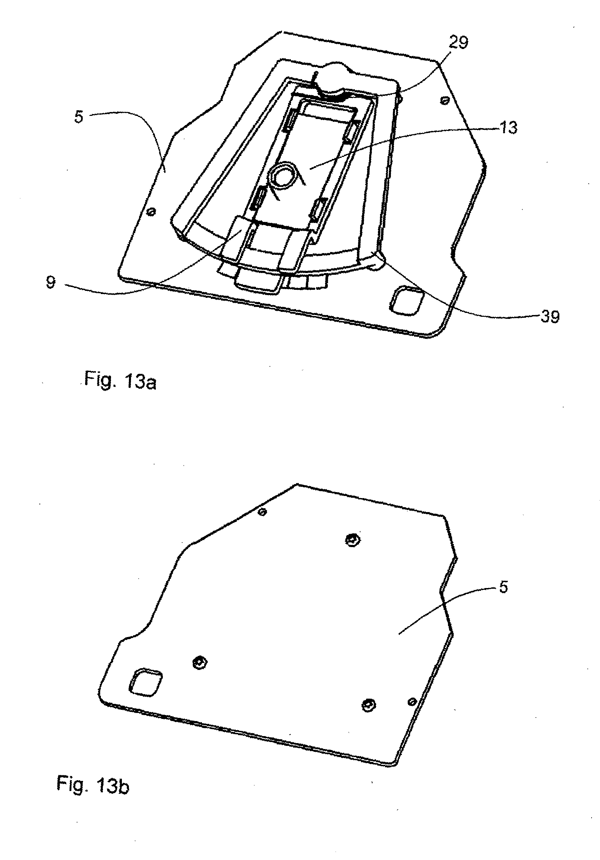

Ein weiteres Beispiel für einen Winkelsensor mit Zwangsführung ist aus Fig. 12 und Fig. 13 zu entnehmen. In diesem Fall ist eine separate Rotorführung 39 anstelle des Umgreifens der Leiterplatte 5 vorgesehen. Die Rotorführung 39 wird gemäß Fig. 13a auf der Leiterplatte 5 befestigt. Als Befestigungsvorrichtung ist gemäß Fig. 13b beispielsweise eine Verschraubung auf der Rückseite vorgesehen, es ist jedoch auch eine Steckverbindung oder eine Hakenverbindung möglich. In Fig. 12a und Fig. 13a ist zu erkennen, wie mit Hilfe der Rotorführung 39 der Rotor 9 und somit dessen Bedämpfungselement einen gleichbleibenden Abstand zu den Spulen der Leiterplatte 5 einhalten. Der Abstand zwischen den Spulen und den Bedämpfungselementen ändert sich auch dann nicht, wenn sich der Rotor z.B. auf Grund von Temperatureinflüssen verzieht.

### Bezugszeichenliste

- 1: Gangwahlhebel
- 3: Winkelsensor
- 5: Leiterplatte
- 7: weiterer Sensor (Winkelsensor)
- 9: Rotor
- 11: Schienen
- 13: Schieber
- 15: Drehlager
- 16: Gleitbahn
- 19: Bügel
- 21: Kugelfortsatz
- 29: Feder
- 30: Tipphebel
- 35: Schenkelfeder
- 39: Rotorführung
- 41: Angstschraube
- 42: Schnapphaken

## Patentansprüche

1. Elektronisches Wählhebelmodul mit einem Mechanismus
- zur Umwandlung einer Schaltgassenbewegung (P, R, N, D; P, R, N, D, S) eines Gangwahlhebels (1) in eine Rotationsbewegung für einen Winkelsensor (3), der auf einer Leiterplatte (5) angeordnet ist,
- und zur Umsetzung einer quer zu der Ebene der Schaltgasse erfolgenden Bewegung (D+, D-; M) des Gangwahlhebels (1) in eine durch einen weiteren, ebenfalls auf der Leiterplatte (5) angeordneten Sensor (7) detektierte Bewegung,
in dem Mechanismus als bewegliche Elemente zusammenwirken:
- ein Rotor (9) zur Betätigung des Winkelsensors (3),
**dadurch gekennzeichnet, dass**
der weitere Sensor (7) ein weiterer Winkelsensor ist und in dem Mechanismus ferner zusammenwerken:
- ein Schieber (13), der an dem Rotor (9) radial in dessen Rotationsebene als während der Rotationsbewegung längenveränderlicher Hebelarm (11, 13, 15) geführt ist, wobei bei der Querbewegung (D+, D-; M) des Gangwahlhebels (1) aus der Ebene der Schaltgasse heraus, die in einer zugehörigen Winkelstellung des Rotors (9) erfolgt, eine zusätzliche Längenänderung des Hebelarms (11, 13, 15) als Drehbewegung eines drehbar gelagerten Tipphebels (30), welcher als eine Art Rotor ausgebildet ist, für den weiteren Winkelsensor (7) nutzbar ist;
- sowohl der Rotor (9) für die Schaltgassenbewegung (P, R, N, D; P, R, N, D, S) als auch der drehbar gelagerte Tipphebel (30) für die Querbewegung mittels einer gemeinsamen Hülse im Ankopplungspunkt angetrieben sind, wobei die Hülse mit dem Schieber (13) fest verbunden und in einer Aussparung des Tipphebels (30) beweglich geführt ist und
- der Gangwahlhebel (1), der über einen Kugelfortsatz (21) so in eine Hül-se des Schiebers (13) eingreift, dass jede in Achsrichtung der Hülse weisende Bewegungskomponente des Gangwahlhebels (1) ohne Weiterleitung dieser Bewegungskomponente ausgeglichen wird, während die übrigen, in der Ebene der Leiterplatte (5) liegenden Bewegungskomponenten des Gangwahlhebels (1) in die beiden Rotationsbewegungen umgesetzt werden.

2. Elektronisches Wählhebelmodul mit einem Mechanismus
- zur Umwandlung einer Schaltgassenbewegung (P, R, N, D; P, R, N, D, S) eines Gangwahlhebels (1) in eine Rotationsbewegung für einen Winkelsensor (3), der auf einer Leiterplatte (5) angeordnet ist,
- und zur Umsetzung einer quer zu der Ebene der Schaltgasse erfolgenden Bewegung (D+, D-; M) des Gangwahlhebels (1) in eine durch einen weiteren, ebenfalls auf der Leiterplatte (5) angeordneten Sensor (7) detektierte Bewegung, wobei
in dem Mechanismus als bewegliche Elemente zusammenwirken:
- ein Rotor (9) zur Betätigung des Winkelsensors (3),
**dadurch gekennzeichnet, dass**
der weitere Sensor (7) ein weiterer Winkelsensor ist und in dem Mechanismus ferner zusammenwirken:
- ein Schieber (13), der innerhalb eines Längsschiebers geführt ist, welcher sich in Schienen bewegt, welche an einer Hilfsvorrichtung in dem Wählhebelmodul angeordnet sind,
- ein Verlängerungsarm des Rotors (9), welcher mit dem Längsschieber zusammenwirkt,
- wobei der Schieber (13) als während der Rotationsbewegung längenveränderlicher Hebelarm (11, 13, 15) geführt ist, wobei bei der Querbewegung (D+, D-; M) des Gangwahlhebels (1) aus der Ebene der Schaltgasse heraus, die in einer zugehörigen Winkelstellung des Rotors (9) erfolgt, eine zusätzliche Längenänderung des Hebelarms (11, 13, 15) als Drehbewegung eines drehbar gelagerten Tipphebels (30), welcher als eine Art Rotor ausgebildet ist, für den weiteren Winkelsensor (7) nutzbar ist, und der Längsschieber die Schaltgassenbewegungen (P, R, N, D) des Gangwahlhebels (1) aufnimmt,
- der drehbar gelagerte Tipphebel (30) für die Querbewegung wird mittels einer Hülse bewegt, wobei die Hülse mit dem Schieber fest verbunden und in einer Aussparung des Tipphebels beweglich geführt ist und
- der Gangwahlhebel (1), der über einen Kugelfortsatz (21) so in eine Hülse des Schiebers (13) eingreift, dass jede in Achsrichtung der Hülse weisende Bewegungskomponente des Gangwahlhebels (1) ohne Weiterleitung dieser Bewegungskomponente ausgeglichen wird, während die übrigen, in der Ebene der Leiterplatte (5) liegenden Bewegungskomponenten des Gangwahlhebels (1) in die beiden Rotationsbewegungen umgesetzt werden..

3. Elektronisches Wählhebelmodul nach Anspruch 1 oder 2, **dadurch gekennzeichnet, dass** die Winkelsensoren (3, 7) mehrere Flachspulen umfassen, die auf einem Kreissegment aneinandergereiht sind.

4. Elektronisches Wählhebelmodul nach Anspruch 1 oder 2, **dadurch gekennzeichnet, dass** der Winkelsensor (3) ein redundantes Kreissegment mit weiteren, aneinander gereihten Flachspulen umfasst

5. Elektronisches Wählhebelmodul nach Anspruch 1 oder 2, **dadurch gekennzeichnet, dass** die Leiterplatte (5) auf ihrer von den Winkelsensoren (3, 7) abgewandten Seite ein Gegenlager trägt, das mit einem Zapfen zur Lagerung des Rotors (9) durch die Leiterplatte (5) greift

6. Elektronisches Wählhebelmodul nach Anspruch 5, **dadurch gekennzeichnet, dass** das Gegenlager mit Stegen, die die Leiterplatte (5) durchgreifen, befestigt ist

7. Elektronisches Wählhebelmodul nach Anspruch 1 oder 2, **dadurch gekennzeichnet, dass** der Rotor (9) mindestens ein elektrisch leitfähiges Betätigungsglied zur Beeinflussung der Induktivitäten der Flachspulen trägt

8. Elektronisches Wählhebelmodul nach Anspruch 1 oder 2, **dadurch gekennzeichnet, dass** der Tipphebel (30) ein elektrisch leitfähiges Betätigungsglied zur Beeinflussung des weiteren Winkelsensors (7) trägt

9. Elektronisches Wählhebelmodul nach Anspruch 1 oder 2, **dadurch gekennzeichnet, dass** der weitere Winkelsensor (7) mehrere Flachspulen umfasst, die auf einem Kreissegment aneinandergereiht sind

10. Elektronisches Wählhebelmodul nach einem der Ansprüche 1 bis 9, **dadurch gekennzeichnet, dass** der Tipphebel (30) für den Fall eines Materialbruches mittels einer Feder (29) vorgespannt ist.

11. Elektronisches Wählhebelmodul nach Anspruch 10, **dadurch gekennzeichnet, dass** der Tipphebel (30) nach dem Materialbruch mittels der Feder (29) in eine Position mit einer Brucherkennungsspule gedrückt wird

12. Elektronisches Wählhebelmodul nach Anspruch 10, **dadurch gekennzeichnet, dass** der Tipphebel (30) nach dem Materialbruch mittels der Feder (29) in eine Position ohne Spule gedrückt wird, so dass kein Signal entsteht

13. Elektronisches Wählhebelmodul nach einem der bisherigen Ansprüche, **dadurch gekennzeichnet, dass** ein Federsystem (31, 32, 33) den Rotor (9) in Achsrichtung gegen die Leiterplatte (5) drückt

## Claims

1. Electronic selector lever module, having a mechanism
- for converting a shift gate movement (P, R, N, D; P, R, N, D, S) of a gear selector lever (1) into a rotational movement for an angle sensor (3) which is arranged on a printed circuit board (5),
- and for converting a movement (D+, D-; M) of the gear selector lever (1), which occurs transversally with respect to the plane of the shift gate, into a movement which is detected by a further sensor (7) which is also arranged on the printed circuit board (5),
wherein the following interact in the mechanism as movable elements:
- a rotor (9) for activating the angle sensor (3), **characterized in that**
the further sensor (7) is a further angle sensor: in the mechanism the following also interact:
- a slide (13) which is guided radially on the rotor (9) in the rotational plane thereof, as a lever arm (11, 13, 15) which has a variable length during the rotational movement, wherein, during the transverse movement (D+, D-; M) of the gear selector lever (1) out of the plane of the shift gate which takes place in an associated angular position of the rotor (9), an additional change in length of the lever arm (11, 13, 15) can be used as a rotational movement of a rotatably mounted momentary contact lever (30), which is embodied as a type of rotor and can be used for the further angle sensor (7);
- both the rotor (9) for the shift gate movement (P, R, N, D; P, R, N, D, S) and the rotatably mounted momentary contact lever (30) for the transverse movement are driven by means of a common sleeve in the coupling point, wherein the sleeve is permanently connected to the slide (13) and is movably guided in a cutout in the momentary contact lever (30), and
- the gear selector lever (1) which engages by means of a ball projection (21) in a sleeve of the slide (13) in such a way that any movement component of the gear selector lever (1) which points in the axial direction of the sleeve is compensated without passing on this movement component, while the other movement components of the gear selector lever (1) which lie in the plane of the printed circuit board (5) are converted into the two rotational movements.

2. Electronic selector lever module, having a mechanism
- for converting a shift gate movement (P, R, N, D; P, R, N, D, S) of a gear selector lever (1) into a rotational movement for an angle sensor (3) which is arranged on a printed circuit board (5),
- and for converting a movement (D+, D-; M) of the gear selector lever (1), which occurs transversally with respect to the plane of the shift gate, into a movement which is detected by a further sensor (7) which is also arranged on the printed circuit board (5),
wherein the following interact in the mechanism as movable elements:
- a rotor (9) for activating the angle sensor (3), **characterized in that**
the further sensor (7) is a further angle sensor: in the mechanism the following also interact:
- a slide (13) which is guided within a longitudinal slide which moves in rails which are arranged on an auxiliary device in the selector lever module,
- an extension arm of the rotor (9) which interacts with the longitudinal slide,
- wherein the slide (13) is guided as a lever arm (11, 13, 15) which has a variable length during the rotational movement, wherein during the transverse movement (D+, D-; M) of the gear selector lever (1) out of the plane of the shift gate, which takes place in an associated angular position of the rotor (9), an additional change in length of the lever arm (11, 13, 15) can be used for the further angle sensor (7) as a rotational movement of a rotatably mounted momentary contact lever (30) which is embodied as a type of rotor, and the longitudinal slide takes up the shift gate movements (P, R, N, D) of the gear selector lever (1),
- the rotatably mounted momentary contact lever (30) for the transverse movement is moved by means of a sleeve, wherein the sleeve is permanently connected to the slide and is movably guided in a cutout in the momentary contact lever, and
- the gear selector lever (1) which engages by means of a ball projection (21) in a sleeve of the slide (13) in such a way that any movement component of the gear selector lever (1) which points in the axial direction of the sleeve is compensated without passing on this movement component, while the other movement components of the gear selector lever (1) which lie in the plane of the printed circuit board (5) are converted into the two rotational movements.

3. Electronic selector lever module according to Claim 1 or 2, **characterized in that** the angle sensors (3, 7) comprise a plurality of flat coils which are arranged one next to the other in a row on a circular segment.

4. Electronic selector lever module according to Claim 1 or 2, **characterized in that** the angle sensor (3) comprises a redundant circular segment with further flat coils which are arranged one next to the other in a row.

5. Electronic selector lever module according to Claim 1 or 2, **characterized in that** the printed circuit board (5) bears, on its side facing away from the angle sensors (3, 7), a counter-bearing which engages with a pin through the printed circuit board (5) in order to support the rotor (9).

6. Electronic selector lever module according to Claim 5, **characterized in that** the counter-bearing is attached with webs which engage through the printed circuit board (5).

7. Electronic selector lever module according to Claim 1 or 2, **characterized in that** the rotor (9) has at least one electrically conductive actuation element for influencing the inductances of the flat coils.

8. Electronic selector lever module according to Claim 1 or 2, **characterized in that** the momentary contact lever (30) has an electrically conductive actuation element for influencing the further angle sensor (7).

9. Electronic selector lever module according to Claim 1 or 2, **characterized in that** the further angle sensor (7) comprises a plurality of flat coils which are arranged one next to the other on a circular segment.

10. Electronic selector lever module according to one of Claims 1 to 9, **characterized in that** the momentary contact lever (30) is prestressed by means of a spring (29) for the case of a material fracture.

11. Electronic selector lever module according to Claim 10, **characterized in that** the momentary contact lever (30) is pressed into a position with a fracture detection coil by means of the spring (29) after the material fracture.

12. Electronic selector lever module according to Claim 10, **characterized in that** the momentary contact lever (30) is pressed into a position without a coil by means of the spring (29) after the material fracture, with the result that no signal is produced.

13. Electronic selector lever module according to one of the preceding claims, **characterized in that** a spring system (31, 32, 33) presses the rotor (9) in the axial direction against the printed circuit board (5).

## Revendications

1. Module électronique à levier de sélection comprenant un mécanisme
- pour convertir un mouvement de parcours de changement de rapport (P, R, N, D ; P, R, N, D, S) d'un levier de sélection de rapport (1) en un mouvement rotatif pour un capteur d'angle (3) qui est monté sur un circuit imprimé (5),
- et pour transformer un mouvement (D+, D- ; M) du levier de sélection de rapport (1) accompli transversalement par rapport au plan du parcours de changement de rapport en un mouvement détecté par un capteur supplémentaire (7), lui aussi monté sur le circuit imprimé (5),
les éléments mobiles suivants interagissant dans le mécanisme:
- un rotor (9) pour actionner le capteur d'angle (3),
**caractérisé en ce que**
le capteur supplémentaire (7) est un capteur d'angle supplémentaire et les éléments suivants interagissent en outre dans le mécanisme :
- un coulisseau (13) qui est guidé sur le rotor (9) dans le sens radial dans son plan de rotation en tant que bras de levier (11, 13, 15) dont la longueur varie pendant le mouvement de rotation, un changement de longueur supplémentaire du bras de levier (11, 13, 15) sous la forme d'un mouvement rotatif d'un levier à impulsion (30), lequel est réalisé sous la forme d'une espèce de rotor, pouvant être utilisé pour le capteur d'angle supplémentaire (7) lors du mouvement transversal (D+, D- ; M) du levier de sélection de rapport (1) depuis le plan du parcours de changement de rapport, lequel se déroule dans une position angulaire correspondante du rotor (9) ;
- le rotor (9) pour le mouvement de parcours de changement de rapport (P, R, N, D ; P, R, N, D, S) ainsi que le levier à impulsion (30) pour le mouvement transversal qui sont tous deux entraînés au moyen d'une douille commune dans le point d'accouplement, la douille étant fixée à demeure avec le coulisseau (13) et étant guidée en mobilité dans un évidement du levier à impulsion (30) et
- le levier de sélection de rapport (1), lequel vient en prise dans une douille du coulisseau (13) par le biais d'un prolongement sphérique (21), de sorte que chaque composante de mouvement du levier de sélection de rapport (1) dirigée dans le sens de l'axe de la douille soit compensée sans transmettre ladite composante de mouvement, alors que les autres composantes de mouvement du levier de sélection de rapport (1) qui se trouvent dans le plan du circuit imprimé (5) sont transformées en les deux mouvements de rotation.

2. Module électronique à levier de sélection comprenant un mécanisme
- pour convertir un mouvement de parcours de changement de rapport (P, R, N, D ; P, R, N, D, S) d'un levier de sélection de rapport (1) en un mouvement rotatif pour un capteur d'angle (3) qui est monté sur un circuit imprimé (5),
- et pour transformer un mouvement (D+, D- ; M) du levier de sélection de rapport (1) accompli transversalement par rapport au plan du parcours de changement de rapport en un mouvement détecté par un capteur supplémentaire (7), lui aussi monté sur le circuit imprimé (5),
les éléments mobiles suivants interagissant dans le mécanisme:
- un rotor (9) pour actionner le capteur d'angle (3),
**caractérisé en ce que**
le capteur supplémentaire (7) est un capteur d'angle supplémentaire et les éléments suivants interagissent en outre dans le mécanisme :
- un coulisseau (13) qui est guidé à l'intérieur d'un coulisseau longitudinal, lequel se déplace dans des rails qui sont disposés dans le module à levier de sélection en tant que dispositif d'assistance,
- un bras prolongateur du rotor (9) qui interagit avec le coulisseau longitudinal,
- le coulisseau (13) étant guidé en tant que bras de levier (11, 13, 15) dont la longueur varie pendant le mouvement de rotation, un changement de longueur supplémentaire du bras de levier (11, 13, 15) sous la forme d'un mouvement rotatif d'un levier à impulsion (30), lequel est réalisé sous la forme d'une espèce de rotor, pouvant être utilisé pour le capteur d'angle supplémentaire (7) lors du mouvement transversal (D+, D- ; M) du levier de sélection de rapport (1) depuis le plan du parcours de changement de rapport, lequel se déroule dans une position angulaire correspondante du rotor (9), et le coulisseau longitudinal accueillant les mouvements de parcours de changement de rapport (P, R, N, D) du levier de sélection de rapport (1) ;
- le levier à impulsion (30) monté de manière pivotante pour le mouvement transversal est déplacé au moyen d'une douille, la douille étant fixée à demeure avec le coulisseau et étant guidée en mobilité dans un évidement du levier à impulsion et
- le levier de sélection de rapport (1), lequel vient en prise dans une douille du coulisseau (13) par le biais d'un prolongement sphérique (21), de sorte que chaque composante de mouvement du levier de sélection de rapport (1) dirigée dans le sens de l'axe de la douille soit compensée sans transmettre ladite composante de mouvement, alors que les autres composantes de mouvement du levier de sélection de rapport (1) qui se trouvent dans le plan du circuit imprimé (5) sont transformées en les deux mouvements de rotation.

3. Module électronique à levier de sélection selon la revendication 1 ou 2, **caractérisé en ce que** les capteurs d'angle (3, 7) comprennent plusieurs bobines plates qui sont alignées les unes contre les autres sur un segment de cercle.

4. Module électronique à levier de sélection selon la revendication 1 ou 2, **caractérisé en ce que** le capteur d'angle (3) comprend un segment de cercle redondant avec d'autres bobines plates alignées les unes contre les autres.

5. Module électronique à levier de sélection selon la revendication 1 ou 2, **caractérisé en ce que** le circuit imprimé (5) comporte, sur son côté à l'opposé des capteurs d'angle (3, 7), un contre-appui qui vient en prise avec un tenon à travers le circuit imprimé (5) pour supporter le rotor (9).

6. Module électronique à levier de sélection selon la revendication 5, **caractérisé en ce que** le contre-appui est fixé avec des montants qui passent à travers le circuit imprimé (5).

7. Module électronique à levier de sélection selon la revendication 1 ou 2, **caractérisé en ce que** le rotor (9) comporte au moins un élément d'actionnement électriquement conducteur pour influencer les inductances des bobines plates.

8. Module électronique à levier de sélection selon la revendication 1 ou 2, **caractérisé en ce que** le levier à impulsion (30) comporte un élément d'actionnement électriquement conducteur pour influencer le capteur d'angle supplémentaire (7).

9. Module électronique à levier de sélection selon la revendication 1 ou 2, **caractérisé en ce que** le capteur d'angle supplémentaire (7) comprend plusieurs bobines plates qui sont alignées les unes contre les autres sur un segment de cercle.

10. Module électronique à levier de sélection selon l'une des revendications 1 à 9, **caractérisé en ce que** le levier à impulsion (30) est précontraint au moyen d'un ressort (29) pour le cas d'une rupture de matériel.

11. Module électronique à levier de sélection selon la revendication 10, **caractérisé en ce que** le levier à impulsion (30), après une rupture de matériel, est poussé au moyen du ressort (29) dans une position avec une bobine de détection de rupture.

12. Module électronique à levier de sélection selon la revendication 10, **caractérisé en ce que** le levier à impulsion (30), après une rupture de matériel, est poussé au moyen du ressort (29) dans une position sans bobine de sorte qu'aucun signal n'est produit.

13. Module électronique à levier de sélection selon l'une des revendications précédentes, **caractérisé en ce qu'**un système de ressort (31, 32, 33) pousse le rotor (9) dans le sens de l'axe contre le circuit imprimé (5).
